## Europäisches Patentamt
## European Patent Office
## Office européen des brevets

(19)

(11) Veröffentlichungsnummer : **0 123 100**
**B1**

(12) # EUROPÄISCHE PATENTSCHRIFT

(45) Veröffentlichungstag der Patentschrift :
03.12.86

(51) Int. Cl.⁴ : **C 01 B 33/02**, H 01 L 31/18

(21) Anmeldenummer : 84102705.5

(22) Anmeldetag : 13.03.84

(54) **Verfahren zur Herstellung von Silicium.**

(30) Priorität : 24.03.83 DE 3310828

(43) Veröffentlichungstag der Anmeldung :
31.10.84 Patentblatt 84/44

(45) Bekanntmachung des Hinweises auf die Patenterteilung : 03.12.86 Patentblatt 86/49

(84) Benannte Vertragsstaaten :
BE CH DE FR GB IT LI NL

(56) Entgegenhaltungen :
CHEMICAL ABSTRACTS, Band 57, Nr. 3, 6. August 1962, Spalten 3076-3077, Zusammenfassung i, Columbus, Ohio, US; SHIRO YOSHIZAWA et al.: "Reduction of silicon tetrachloride with aluminum"
P. PASCAL: "Nouveau traite de chimie minérale", Band VIII, 2. Heft, "Silicium", Seiten 275 und 280, Masson et Cie., Editeurs, Paris, FR;

(73) Patentinhaber : BAYER AG
Konzernverwaltung RP Patentabteilung
D-5090 Leverkusen 1 Bayerwerk (DE)

(72) Erfinder : Woditsch, Peter, Dr.
Deswatinesstrasse 83
D-4150 Krefeld (DE)
Erfinder : Abels, Martin
Settiner Strasse 84
D-4150 Krefeld (DE)
Erfinder : Brazel, Berthold, Dr.
Bethelstrasse 18
D-4150 Krefeld (DE)

EP 0 123 100 B1

Jouve, 18, rue St-Denis, 75001 Paris, France

## Beschreibung

Die vorliegende Erfindung betrifft ein Verfahren zur Herstellung von Silicium durch Umsetzung von Siliciumverbindungen der allgemeinen Formel $SiH_nX_{4-n}$, wobei X Halogen bedeutet und n Werte von 0 bis 3 annehmen kann, mit im festen Zustand vorliegendem Aluminium.

An Versuchen, durch photovoltaische Stromerzeugung Sonnenenergie im terrestrischen Bereich zu nutzen, hat es in den vergangenen Jahren nicht gefehlt. Bis heute wird als Rohstoff dafür fast ausschließlich Halbleitersilicium eingesetzt, dessen Herstellungsverfahren aus dem Bereich der Halbleitertechnologie bekannt sind.

So gewinnt man nach dem klassischen Siemens-Wacker Verfahren Silicium, indem zunächst Quarz mittels Kohle zu Rohsilicium reduziert wird. Dieses wird anschließend mit Chlorwasserstoff zu Trichlorsilan umgesetzt, aus dem nach destillativer Reinigung durch Wasserstoff reduktiv an hocherhitzten Siliciumstäben hochreines polykristallines Halbleitersilicium abgeschieden wird.

Durch verschiedene Methoden des Tiegelziehens oder durch Zonenschmelzen, eventuell in Gegenwart von Dotierstoffen, wird einkristallines Silicium erhalten. Nach dem Sägen sind ca. 400 μm dicke Scheiben zugänglich als Ausgangsmaterial für Halbleiterbauelemente oder für Solarzellen.

Während die Materialkosten dieser Scheiben in der Halbleiterindustrie von untergeordneter Bedeutung sind, kommt ihnen bei der Photovoltaik ausschlaggebende Bedeutung zu. Bei vorgegebener Sonneneinstrahlung ist die elektrische Leistung einer Solarzelle der Fläche proportional, so daß eine Solarzelle von 100 cm² bei einem Wirkungsgrad von 10 % im Mittel etwa 2 kWh/a liefert. Kommerzielle Solarzellen auf der Basis von kostspieligem Halbleitersilicium sind daher viel zu teuer, um mit herkömmlichen Energiequellen im terrestrischen Einsatz konkurrieren zu können.

In der Raumfahrt wurde die Photovoltaik erfolgreich fortentwickelt und es konnten sich Solarzellen zur Deckung des Energiebedarfs im kosmischen Bereich bereits als zuverlässig und konkurrenzfähig durchsetzen. Zur Lösung aktueller terrestrischer Energieprobleme kann die Photovoltaik dann beitragen, wenn es gelingt, Solarzellen zu entwickeln, die hinsichtlich Preis und Wirkungsgrad kostenmäßig mit den konventionellen Energiequellen konkurrieren können. Eine Grundbedingung zur Nutzung der Sonnenenergie in großem Maßstab ist daher ein wirtschaftliches Verfahren zur Siliciumherstellung, das den Anforderungen an die Reinheit von Solarzellen-Silicium genügt.

Silicium kann wirtschaftlich im großen Maßstab metallurgisch durch Reduktion von Quarzsand mittels Kohle im Lichtbogenofen gewonnen werden. Ein auf diese Weise erzeugtes Silicium weist jedoch nur einen Reinheitsgrad von 98 bis 99 % auf und genügt somit den Anforderungen als Halbleiter in Solarzellen nicht. Neben metallischen Verunreinigungen, insbesondere Eisen, sind u. a. Elemente der III. und V. Hauptgruppe des Periodensystems der Elemente anwesend, wobei Bor und Phosphor die spezifische Leitfähigkeit des Halbleitermaterials Silicium entscheidend negativ beeinflussen.

Gemäß der DE-A 3 013 319 kann hochreines Silicium erhalten werden durch die Reaktion hochreinen Quarzsandes mit kohlenstoffhaltigen Reduktionsmitteln. Auch kann man metallurgisch gewonnenes Silicium gemäß der DE-A 2 623 413 einem Reinigungsprozeß unterwerfen.

In der Europäischen Patentanmeldung EP-A 0 029 182 wird ein semikontinuierliches Verfahren zur Herstellung von reinem Silicium beschrieben. In einem Kreisprozeß wird Silicium durch Reduktion von in Aluminiumsulfidschlacke gelöstem feinteiligen Quarzsand mittels Aluminium gewonnen. Das in überschüssigem Aluminium gelöste Silicium wird durch Auskristallisation abgetrennt, das entstehende $Al_2O_3$ aus der Schlacke abgezogen und zur Aluminiumrückgewinnung der Elektrolyse unterworfen.

Eine weitere Möglichkeit besteht darin, die leicht zu reinigenden Siliciumhalogenide mit metallischen Reduktionsmitteln zu reinem Silicium umzusetzen.

So wird $SiF_4$ (Stanford Research Institute : Mater. Res. Bull. *16* (4), 437 (1981) oder $SiCl_4$ (DE-A 2 800 254) mit metallischem Natrium in der Gasphase zu reinem Silicium reduziert.

Die US-A 3 012 862 beinhaltet ein Verfahren zur Herstellung von Silicium aus $SiCl_4$ mit Zinkdampf.

P. Pascal, Nouveau traité de chimie minérale, Band VIII, 2. Heft, Silicium, Seite 275 erwähnt ein Verfahren zur Herstellung von Silicium durch Umsetzung von Siliciumtetrachlorid und Aluminium bei einer Temperatur von 360 °C.

Alle genannten Verfahren genügen insbesondere aus wirtschaftlichen Gründen nicht den Anforderungen, um im großtechnischen Maßstab ein Silicium für Solarzellen herzustellen.

Ziel der vorliegenden Erfindung ist es somit, ein Verfahren zur Verfügung zu stellen, nach dem es gelingt, in wirtschaftlicher Weise ein reines, auch für Solarzellen geeignetes Silicium zu erhalten.

Überraschenderweise können diese Anforderungen erfüllt werden durch ein Verfahren, bei dem Siliciumhalogenide mit im festen Zustand vorliegendem Aluminium zu Silicium bei Temperaturen zwischen 500 und 660 °C unter Entstehung von Aluminiumhalogenid umgesetzt werden.

Gegenstand der vorliegenden Erfindung ist somit ein Verfahren zur Herstellung von Silicium durch Umsetzung von Siliciumverbindungen der allgemeinen Formel $SiH_nX_{4-n}$, wobei X Halogen bedeutet und n Werte von 0 bis 3 annehmen kann, mit im festen Zustand vorliegendem Aluminium, welches dadurch gekennzeichnet ist, daß die Umsetzung bei Temperaturen zwischen 500 und 660 °C erfolgt.

Die bevorzugten Temperaturen beim erfindungsgemäßen Verfahren während der Umsetzung liegen zwischen 550 °C und 650 °C.

Während der einzelnen Phasen der Umsetzung ist die Temperatur mit Rücksicht auf den Schmelzpunkt des jeweils vorliegenden Al/Si-Verhältnisses, insbesondere des Al/Si-Eutektikums, so zu führen, daß jederzeit im Reaktor nur Gase und Feststoffe vorliegen. Danach sollte die Reaktion bei Temperaturen unterhalb von 570 °C gestartet werden. Im Verlauf der fortschreitenden Reaktion kann die Temperatur gesteigert werden. Eine Temperatur von 660 °C ist im allgemeinen ausreichend, um die Umsetzung quantitativ auszuführen.

Das erfindungsgemäße Verfahren kann hinsichtlich der Temperaturführung auch stufenweise durchgeführt werden. Beispielsweise kann in einem ersten Reaktionsschritt eine teilweise Umsetzung erfolgen, wobei ein vorreagiertes Ausgangsprodukt mit einem Al/Si-Verhältnis von kleiner als 4 erhalten wird. Dieses vorreagierte Produkt kann dann anschließend in einem oder mehreren Reaktionsschritten mit weiteren Siliciumhalogeniden oder Silanen der allgemeinen Formel $SiH_nX_{4-n}$ umgesetzt werden, bis ein vollständiger Umsatz des metallischen Aluminiums stattgefunden hat.

Die Reaktionstemperaturen können dabei nach Maßgabe des Erstarrungspunktes des jeweils vorliegenden Al/Si-Verhältnisses beträchtlich über die Temperatur von 660 °C, dem Schmelzpunkt des reinen Aluminiums, gesteigert werden.

Das erfindungsgemäße Verfahren ist unabhängig von der Verwendung eines bestimmten Siliciumhalogenids, Halogensilans, Silans oder irgendeiner zwei- oder mehr-komponentigen Mischung derselben sowie unabhängig von ihrer Gewinnung aus irgendeinem chemischen oder physikalischen Prozeß. Dabei werden als Halogene im Sinne der Erfindung Fluor, Chlor, Brom und Jod verstanden. So kann das Siliciumhalogenid $SiCl_4$ z. B. aus Quarz oder $SiO_2$-haltigem Stoff durch Einwirken von Kohle und Chlor oder Phosgen erhalten werden. Ferner kann $SiCl_4$ durch Umsatz von metallorganischem Silicium mit Chlor oder Chlorwasserstoff hergestellt werden. Eine weitere Siliciumhalogenid- und Halogensilanquelle kann z. B. der Destillationsrückstand und auch der Rückstand der Kontaktmasse bei der Rochow-Synthese sein. Die unerwünschten Nebenprodukte und Zwangsanfallsprodukte bei dem klassischen Siemens-Wacker-Prozeß können hier zur Si-Herstellung für Solarzellen eingesetzt werden.

Die Zufuhr der gasförmigen Siliciumverbindungen zur Reaktion kann in reiner Atmosphäre oder zusammen mit inerten, an der Reaktion nicht teilnehmenden Gasen, wie z. B. $N_2$, Ar, $SF_6$, erfolgen, wobei sich der Partialdruck der Siliciumverbindung in weiten Grenzen bewegen kann. Vorzugsweise wird die Siliciumverbindung im Überschuß eingesetzt, um eine raschere Reaktion und damit verringerte Verweilzeiten der Produkte im Reaktor zu erreichen.

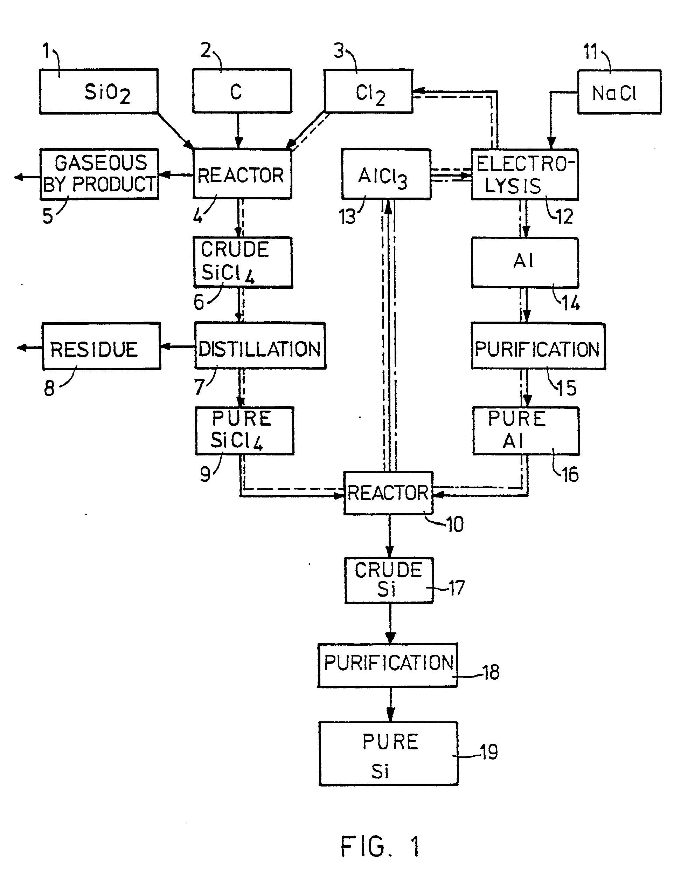

In einer besonders bevorzugten Ausführungsform wird jedoch als Siliciumverbindung Siliciumtetrachlorid $SiCl_4$ eingesetzt. Bei der Umsetzung von destillativ gereinigtem $SiCl_4$ mit reinem Aluminium bilden sich reines Silicium neben $AlCl_3$. Diese Variante kann zu einem eleganten Kreisprozeß (Fig. 1) des erfindungsgemäßen Verfahrens ausgestaltet werden, der in beliebigem Maßstab großtechnisch ökonomisch und ohne ökologische Probleme durchgeführt werden kann.

Ein möglicher Kreisprozeß ist schematisch in Fig. 1 dargestellt. Er besteht wiederum aus zwei Kreisläufen, dem « Chlorkreislauf » auf der linken Seite und dem « Aluminiumkreislauf » auf der rechten Seite.

Ausgehend von $SiO_2$ (1), Kohle (2) und Chlor (3) wird in bekannter Weise eine Umsetzung (4) vorgenommen, nach Entfernung der gasförmigen Reaktionsprodukte (5) wie Kohlenmonoxid ein zum größten Teil aus $SiCl_4$ bestehendes Rohprodukt $SiCl_4$ (6) erhalten, welches in einem Destillationsschritt (7) in einen Rückstand (8) und reines $SiCl_4$ (9) aufgetrennt wird. Dieses $SiCl_4$ (9) wird dann für die Umsetzung (10) mit Aluminium eingesetzt. Das dabei entstehende $AlCl_3$ (13) wird ebenso wie NaCl (11) einer Elektrolyse (12) unterworfen, wodurch der Chlorbedarf (3) für das Verfahren gedeckt und auch Roh-aluminium (14) erhalten wird. Letzteres wird in einer Reinigungsstufe (15) in reines Aluminium (16) überführt, welches mit dem $SiCl_4$ (9) in einer Umsetzungsstufe (10) zum bereits erwähnten $AlCl_3$ (13) und zu Roh-Silicium (17) reagiert. Nach entsprechender Verarbeitung (18) wird schließlich Silicium (19) erhalten, welches den hohen Anforderungen bezüglich dessen Reinheit genügt.

In diesem beschriebenen Kreisprozeß sind letztlich $SiO_2$ und Kohlenstoff die Edukte, das Endprodukt ist elementares Silicium.

Alternativen zur Elektrolyse des Aluminiumchlorids sind in den verschiedensten Verfahren zu sehen. Eine Einsatzform für $AlCl_3$ könnte in der Verwendung bei organischen Synthesen liegen, bei denen ein großer Bedarf an $AlCl_3$ besteht.

Das benötigte Aluminium kann in weitgehend beliebiger reaktiver und analytischer Qualität beim erfindungsgemäßen Verfahren eingesetzt werden.

Besonders bevorzugt ist jedoch ein feinteiliges Aluminium mit einer BET-Oberfläche von mehr als 0,05 m²/g, vorzugsweise zwischen 0,1 m²/g und 0,2 m²/g. Es ist dabei unerheblich, auf welche Art und Weise ein Aluminium-Grieß in dieser Feinteiligkeit erhalten wird, z. B. durch mechanische Zerkleinerung wie Raspeln, Feilen oder Schleifen oder sei es durch Verdüsen von flüssigem Aluminium mit Gasen.

Eine besondere Eigenheit des erfindungsgemäßen Verfahrens ist, daß das entstehende Silicium in seiner äußeren Form ähnlich der Form des eingesetzten feinteiligen Aluminiums ist. Das erfindungsgemäße Verfahren führt also zu einer enantiomorphen Umwandlung des Aluminiums in Silicium und umgeht so alle Probleme ähnlicher Reaktionen, wobei die Umsetzung in der Gasphase erfolgt.

Beim erfindungsgemäßen Verfahren fällt das Silicium somit in relativ grober Form an, während bei Umsetzungen von Siliciumhalogeniden in der Gasphase die Gewinnung eines grobkörnigen Siliciums große Schwierigkeiten bereitet (US-A 3 012 862).

Das erfindungsgemäße Verfahren ist durchführbar, unabhängig von der analytischen Reinheit des eingesetzten Aluminiums. Es kann durch Elektrolyse gewonnenes Aluminium, vorzugsweise einer Reinheit von 99,5 % bis 99,9 % Al eingesetzt werden. Selbstverständlich bleibt die Reinheit des verwendeten Aluminiums nicht ohne Einfluß auf die Reinheit des entstehenden Siliciums. Das nach dem erfindungsgemäßen Verfahren zugängliche Silicium ist in seiner Reinheit abhängig von dem Aluminium, dem Siliciumhalogenid und den Anlagen bei der Herstellung. Je reiner das Silicium sein soll, desto reinere Ausgangsprodukte kommen zum Einsatz und umso mehr Sorgfalt muß auf die Werkstoffauswahl der verwendeten Reaktoren gerichtet werden.

Die Umsetzung der Siliciumverbindungen mit Aluminium kann in unterschiedlichen Reaktoren durchgeführt werden. Möglich ist die Umsetzung diskontinuierlich in einem Festbettreaktor oder in einem Wirbelschichtreaktor. Kontinuierliche Umsetzungsprozesse können in Drehteller-, Ringöfen oder insbesondere in Drehrohröfen erfolgen. Der gesamte Umsetzungsvorgang kann auch durch Kombination verschiedener Reaktoren kontinuierlich oder diskontinuierlich durchgeführt werden. Die Reaktoren müssen mit Materialien ausgekleidet sein, die thermisch, mechanisch und chemisch sowohl gegen die Reaktionsedukte als auch gegen die Reaktionsprodukte resistent sind.

Das nach dem erfindungsgemäßen Verfahren hergestellte Silicium kann entweder direkt oder nach einer üblichen, dem Stand der Technik entsprechenden Nachreinigung, wie Säurelaugung, zur Herstellung von ein- oder polykristallinen Siliciumblöcken verwendet werden.

Der besondere Vorteil des erfindungsgemäßen Verfahrens besteht in der Reinheit des Siliciums hinsichtlich Bor und Phosphor, den beiden Elementen, die bei der Reinigung von metallurgischem Silicium die größten Probleme aufweisen. Beide Elemente liegen bei Einsatz geeigneter Rohstoffe unter einem Schwellenwert von 1 ppm. Die vorliegende Erfindung betrifft somit auch die Verwendung des erfindungsgemäß hergestellten Siliciums für die Herstellung von Solarzellen.

Die besonderen Vorteile des erfindungsgemäßen Verfahrens sind ein geringer Energiebedarf, resultierend aus den vergleichsweise niedrigen Reaktionstemperaturen und der damit verbundenen geringen thermischen Materialbelastung. Weiterhin ist es vorteilhaft, daß es bei dem anfallenden Silicium keiner gesonderten oder aufwendigen Abtrennoperation von Nebenprodukten bedarf, da das entstehende Aluminiumchlorid während der Reaktion absublimiert.

Schließlich erlaubt die grobteilige Form des anfallenden Siliciums eine unproblematische Handhabung bei der weiteren Verarbeitung.

Die nachfolgenden Beispiele sollen das erfindungsgemäße Verfahren näher beschreiben, ohne die Erfindung dadurch einzuschränken.

Beispiel 1

20 g Aluminium-Feilspäne werden in einem Alsint-Glühkasten mit einer Bodenfläche von ca. 50 cm$^2$ gleichmäßig verteilt und in einem elektr. beheizbaren Alsintrohr unter Stickstoffatmosphäre auf 550 °C erhitzt. Dann wird dampfförmiges $SiCl_4$ übergeleitet, wobei die Temperatur stetig, bis zum Ende der Reaktionszeit, auf ca. 650 °C erhöht wird. Nach einer Zeit von 3 Stunden hat sich das eingesetzte Aluminium nahezu vollständig unter Bildung von $AlCl_3$ umgesetzt. Das absublimierte $AlCl_3$ wird mit dem überschüssigen $SiCl_4$ abgeleitet und in geeigneten Vorlagen kondensiert. In dem Glühkasten verbleibt das sich in stöchiometrischer Menge gebildete Silicium als leicht zerteilbarer Kristallkuchen. Das so erhaltene Silicium weist einen Borgehalt von < 0,5 ppm und einen Phosphorgehalt von < 1 ppm auf.

Beispiel 2

Entsprechend Beispiel 1 wird anstatt $SiCl_4$ die Umsetzung des Aluminiums mit Trichlorsilan $SiHCl_3$ durchgeführt.

Als Reaktionsprodukt wird ebenfalls in stöchiometrischer Menge Silicium erhalten, dessen Teilchengröße der des eingesetzten Aluminiums entspricht. Das gewonnene Silicium weist einen Borgehalt von < 0,5 ppm und einen Phosphorgehalt von < 1 ppm auf.

Beispiel 3

In einem Quarzrohr mit Begasungsfritte wird Aluminiumgrieß durch Einblasen von Stickstoff in den Wirbelzustand versetzt. Das Wirbelbett wird dabei durch einen den Reaktor umgebenden Elektro-Ofen und den vorgeheizten Gasstrom aufgeheizt. Nach Erreichen einer Temperatur von 400 °C wird mit einer Dosierpumpe $SiCl_4$ über einen Verdampfer in den $N_2$-Strom eingefahren, wobei das $N_2$-$SiCl_4$-Verhältnis im Laufe der Betriebszeit zugunsten von $SiCl_4$ verändert wird. Die Reaktionsgase werden über Kondensationseinrichtungen (Vorlagen für $AlCl_3$ und Kühlfallen für nicht umgesetztes $SiCl_4$) abgeleitet. Nach einer Reaktionszeit von 3-4 Stunden bei einer Endtemperatur von 650 °C besteht der Reaktorinhalt aus Si in Form von Kristallagglomeraten. Der in diesem Silicium bestimmte Borgehalt liegt unter 0,5 ppm, der an Phosphor unter 1 ppm.

Beispiel 4

Ein mit Alsint ausgekleideter Drehrohrofen wird bei einer Temperatur von 550-650 °C kontinuierlich mit Aluminium-Grieß beschickt, welches im Gegenstrom mit $SiCl_4$ kontaktiert wird. Die Neigung und die Drehgeschwindigkeit des Drehrohrofens sind dabei so eingestellt, daß eine Verweilzeit des Rohrinhaltes in der beheizten Zone von 2,5 bis 3 Stunden gewährleistet ist. Die Reaktionsgase werden am oberen Ende des Drehrohres über Kondensationsanlagen abgeleitet.

Am Drehrohrauslaufrohr fällt Silicium in Form rieselfähiger Kristallagglomerate an, deren Gehalt an Bor < 0,5 ppm und an Phosphor < 1 ppm beträgt.

Beispiel 5

In einem senkrecht stehenden, mit einer Fritte versehenem Quarzrohr wird eine Schüttung von Aluminium-Grieß eingefüllt und unter Stickstoff auf eine Temperatur von 550 °C erhitzt. Anschließend wird $SiCl_4$ über einen Verdampfer in den Stickstoffstrom geleitet, wobei die $N_2$-Zufuhr soweit gedrosselt ist, daß ein Gasgemisch von etwa 20 % $N_2$ und 80 % $SiCl_4$ entsteht. Nach einer Dauer von 3 Stunden in der die Temperatur stetig bis auf 650 °C erhöht wird, ist der Aluminium-Umsatz nahezu quantitativ und der Reaktorinhalt besteht aus einem leicht verbackenen Kristallkuchen aus Silicium, dessen Gehalt an Bor < 0,5 ppm und an Phosphor < 1 ppm ist.

**Patentansprüche**

1. Verfahren zur Herstellung von Silicium durch Umsetzung von Siliciumverbindungen der allgemeinen Formel $SiH_nX_{4-n}$, wobei X Halogen bedeutet und n Werte von 0 bis 3 annehmen kann, mit im festen Zustand vorliegendem Aluminium, dadurch gekennzeichnet, daß die Umsetzung bei Temperaturen zwischen 500 °C und 660 °C erfolgt.

2. Verfahren gemäß Anspruch 1, dadurch gekennzeichnet, daß die Temperaturen zwischen 550 °C und 650 °C liegen.

3. Verfahren gemäß einem der Ansprüche 1 oder 2, dadurch gekennzeichnet, daß die Siliciumverbindung Siliciumtetrachlorid ist.

4. Verfahren gemäß einem der Ansprüche 1 bis 3, dadurch gekennzeichnet, daß feinteiliges Aluminium mit einer spezifischen Oberfläche von mehr als 0,05 m²/g eingesetzt wird.

**Claims**

1. Process for the production of silicon by reacting silicon compounds of the general formula $SiH_nX_{4-n}$, wherein X denotes halogen and n can assume values from 0 to 3, with aluminium present in the solid state, characterised in that the reaction is carried out at temperatures between 500 °C and 660 °C.

2. Process according to Claim 1, characterised in that the temperatures are between 550 °C and 650 °C.

3. Process according to one of Claims 1 or 2, characterised in that the silicon compound is silicon tetrachloride.

4. Process according to one of Claims 1 to 3, characterised in that finely-divided aluminium with a specific surface area of more than 0.05 m²/g is used.

**Revendications**

1. Procédé pour produire du silicium par réaction de composés du silicium de formule générale $SiH_nX_{4-n}$, dans laquelle X représente un halogène et n peut valoir de 0 à 3, avec de l'aluminium présent à l'état solide, procédé caractérisé en ce que la réaction a lieu à des températures comprises entre 500 °C et 660 °C.

2. Procédé selon la revendication 1, caractérisé en ce que les températures se situent entre 550 °C et 650 °C.

3. Procédé selon l'une des revendications 1 ou 2, caractérisé en ce que le composé de silicium est le tétrachlorure de silicium.

4. Procédé selon l'une des revendications 1 à 3, caractérisé en ce qu'on utilise de l'aluminium en fines particules ayant une surface spécifique supérieure à 0,05 m²/g.

FIG. 1